# EUROPEAN PATENT SPECIFICATION

(11) **EP 4 344 760 B1**
(45) Date of publication and mention of the grant of the patent: **17.12.2025**
(21) Application number: 23808651.6
(22) Date of filing: 12.05.2023
(51) Int. Cl.: C01D 15/00, B01D 9/00

(54) **LITHIUM HEXAFLUOROPHOSPHATE CRYSTALLIZATION METHOD**
VERFAHREN ZUR KRISTALLISATION VON LITHIUMHEXAFLUORPHOSPHAT
PROCÉDÉ DE CRISTALLISATION D'HEXAFLUOROPHOSPHATE DE LITHIUM

(30) Priority: 01.08.2022 CN 202210915939
(43) Date of publication of application: 03.04.2024
(73) Proprietor: Morimatsu (Jiangsu) Heavy Industry Co., Ltd., Nantong, Jiangsu 226532 (CN); Shanghai Morimatsu Engineering Technology Co. Ltd, Shanghai 201617 (CN)
(72) Inventor: XU, Sheng, Nantong, Jiangsu 226532 (CN); CHEN, Hongwei, Nantong, Jiangsu 226532 (CN); LI, Zhenxing, Nantong, Jiangsu 226532 (CN); NISHIMATSU, Koei, Nantong, Jiangsu 226532 (CN)
(74) Representative: Hoefer & Partner Patentanwälte mbB
(86) International application number: PCT/CN2023/093962
(87) International publication number: WO 2024/027270

(56) References cited:
- CN-A- 109 608 372
- CN-A- 111 606 337
- CN-A- 113 289 369
- CN-A- 114 713 154
- CN-A- 114 713 154
- CN-A- 114 788 961
- CN-A- 114 788 961
- CN-A- 115 253 361
- CN-U- 218 944 402
- JP-A- 2015 040 163

## Description

### TECHNICAL FIELD

The present disclosure relates to a production system of lithium hexafluorophosphate, in particular to a crystallization system and crystallization method of lithium hexafluorophosphate.

### BACKGROUND

Lithium hexafluorophosphate, a lithium salt as a key material for lithium-ion batteries, is applied to lithium-ion electrolytes in two main forms: one is crystalline lithium hexafluorophosphate, and the other is a liquid lithium salt formulated together with an organic solvent. Lithium hexafluorophosphates currently sold in foreign markets are all crystalline lithium hexafluorophosphates. The reasons are mainly rooted in benefit to product transportation and preservation with less hidden safety hazards and more compatibility with the process systems of electrolyte manufacturers. With the healthy, sustained, and steady development of the renewable energy industry in China, the demand for crystalline lithium hexafluorophosphates is also increasing. Breakthrough and improvement of the production technology of crystalline lithium hexafluorophosphates and improvement of the product quality of crystalline lithium hexafluorophosphates are the focus of domestic research at present.

**At** present, the preparation method for lithium hexafluorophosphate mainly includes: a gas-solid direct reaction method, a solvent method, and an ion exchange method, among which the most extensively researched, technically mature, and widely used technique in industrialization is the hydrogen fluoride solvent method. The currently available hydrogen fluoride solvent method is to dissolve a lithium salt in anhydrous hydrofluoric acid to form a LiFHF solution, into which phosphorus pentafluoride (PF₅) gas is introduced for reaction to yield lithium hexafluorophosphate. That is, the technology of preparing lithium hexafluorophosphate by the hydrogen fluoride solvent method is currently a more mature technology and is also the easiest production method to realize industrialization.

Specifically, the hydrogen fluoride solvent method is a method of using hydrogen fluoride as a reaction medium, dissolving raw material lithium halide in the hydrogen fluoride, then gasifying high-purity phosphorus pentafluoride, and next introducing gas into the solvent for reaction to yield a lithium hexafluorophosphate crystal. After completion of the reaction, the lithium hexafluorophosphate crystal is subjected to crystal separation, drying and the like to finally obtain a lithium hexafluorophosphate product.

In spite of highly concerned, lithium hexafluorophosphates are still unable to be produced on a large scale mainly because of the great difficulties in production technology.

**As** the commonly used crystallization method for lithium hexafluorophosphate, there are mainly two methods: static crystallization and agitated crystallization. The two methods have their own advantages and disadvantages. The static crystallization includes the following advantages: (1) hydrogen fluoride is relatively in a static state, so it is more stable and safer; and (2) the crystallization speed is slow and products and impurities can be separated and precipitated in the crystalline solution due to their difference in solubility, which is conducive to the purity and quality of the finished products. The static crystallization includes the following disadvantages: (1) there is a need for a sufficiently low temperature and stricter requirements for freezing, and it takes long time to crystallize, resulting in large energy consumption, which is not conducive to cost control; and (2) the particles resulting from crystallization are large and need to be further crushed by a physical method, which leads to irregular and non-uniform particles of the product and poorer fluidity. Besides, the agitated crystallization includes the following advantages: (1) the agitated crystallization allows for uniform particles and relatively stable product quality; and (2) the crystallization time is short, the requirements for temperature are lower than those for the static crystallization, the energy consumption is less, and its production cycle is shorter than that of the static crystallization, which can effectively improve the production efficiency. Nevertheless, the agitated crystallization includes the following disadvantages: (1) agitated crystallization of hydrofluoric acid causes volatility to increase, which leads to increased loss of hydrogen fluoride raw material; (2) the crystallization speed of the agitated crystallization is faster, which may lead to crystallization of impurity components in the mother liquor together, resulting in more impurity components in the product; and (3) mechanical seal of the agitation is prone to corrosion and leakage.

In recent years, the agitated crystallization is widely used. However, the current agitated crystallization is always batch crystallization, that is, the synthesized mother liquor of lithium hexafluorophosphates is subjected to crystallization, grain growth, and final growth to the desired size of grains in the same crystallization kettle. The mother liquor of lithium hexafluorophosphate undergoes several different stages from crystallization to growth to the desired sized of grains, and each of the stages is required to control the crystallization kettle to adopt different process parameters (such as temperature). In this way, not only is the control more complicated, but the course of crystallization fails to realize continuous feeding (feeding of mother liquors) and continuous discharging (delivering the lithium hexafluorophosphate grains finally growing to the desired size into the next process device). Consequently, the course of crystallization including the feeding process and discharging process still has the problems such as long cycle and low turnover efficiency of devices such as a crystallization kettle.

In view of the above, there is now an urgent need in this technical field for a crystallization system and crystallization method of lithium hexafluorophosphate that can improve the turnover efficiency of devices such as a crystallization kettle and further improve the production efficiency of the agitated crystallization.

CN114713154A discloses a system and a process method for preparing lithium hexafluorophosphate, and the system for preparing lithium hexafluorophosphate comprises a phosphorus pentafluoride generation device used for producing phosphorus pentafluoride gas required by reaction; the lithium hexafluorophosphate preparation device is used for producing lithium hexafluorophosphate; the crystallization device is used for converting solute lithium hexafluorophosphate into a solid state; the separating and drying device is used for separating and drying lithium hexafluorophosphate and mother liquor; and the tail gas recovery device is used for systematically recovering and treating tail gas.

CN114788961 A discloses high-purity lithium hexafluorophosphate continuous dynamic crystallization process device is characterized in that: it includes a primary crystallization circulation system, a secondary crystallization circulation system and a fully enclosed filtration equipment, and the primary crystallization circulation system includes a primary circulation pump (2), a primary cooler (3), a primary crystallizer ( 4), a primary discharge pump (5), the outlet of the primary crystallizer (4) is connected to the inlet of the primary circulation pump (2), and the secondary crystallization circulation system includes a secondary circulation pump (7) connected in sequence. ), a secondary cooler (6), a secondary crystallizer (8), a secondary discharge pump (9), and the bottom outlet of the secondary crystallizer (8) is connected to the secondary circulating pump (7). The fully enclosed filtration equipment includes a crystal slurry buffer tank (10), a filter (11) and a mother liquor pump (12) connected in sequence, and a raw material pump (1) is also connected to the inlet of the primary circulating pump (2). The outlet of the discharge pump (5) is connected to the inlet of the secondary crystallizer (8), the outlet of the secondary discharge pump (9) is connected to the inlet of the crystal slurry buffer tank (10), and the outlet of the mother liquor pump (12) is connected to the inlet of the secondary crystallizer (8). Inlet connection of stage circulating pump (7).

### SUMMARY

The present invention is defined by the appended claims. A crystallization system and crystallization method of lithium hexafluorophosphate provided in the present disclosure are designed, on the basis of agitated crystallization, to carry out different crystallization stages separately in different crystallization kettles according to the crystallization characteristics of lithium hexafluorophosphate, and connect the crystallization kettles for carrying out different crystallization stages in series, such that continuous feeding and continuous discharging are realized in the course of crystallization, thereby fulfilling the purpose of further improving the production efficiency of lithium hexafluorophosphate.

The present disclosure provides a crystallization system of lithium hexafluorophosphate, comprising a first-stage crystallization kettle, a second-stage crystallization kettle, a third-stage crystallization kettle, and one or more fourth-stage crystallization kettles; the first-stage crystallization kettle, which is connected to a lithium hexafluorophosphate mother liquor supply source through a lithium hexafluorophosphate mother liquor supply line; further connected to the lithium hexafluorophosphate mother liquor supply source through a mother liquor heat exchange line connected with a mother liquor heat exchanger; and further connected to the second-stage crystallization kettle through a first mother liquor delivery line configured to deliver lithium hexafluorophosphate mother liquor having a first prescribed grain size, the second-stage crystallization kettle, which is connected to the third-stage crystallization kettle through a second mother liquor delivery line configured to deliver lithium hexafluorophosphate mother liquor having a second prescribed grain size, the third-stage crystallization kettle, which is connected to the fourth-stage crystallization kettle through a crystalline particle delivery line configured to deliver small crystalline particles in the third-stage crystallization kettle; and further connected to a next process device through a first discharging line; the fourth-stage crystallization kettle, which is connected to a next process device through a second discharging line; when the lithium hexafluorophosphate mother liquor supplied from the lithium hexafluorophosphate mother liquor supply source to the first-stage crystallization kettle crystallizes and grows to the first prescribed grain size under the condition that the temperature of the lithium hexafluorophosphate mother liquor is controlled within a first prescribed temperature range by the mother liquor heat exchanger, the lithium hexafluorophosphate mother liquor being delivered to the second-stage crystallization kettle through the first mother liquor delivery line; when the lithium hexafluorophosphate mother liquor delivered to the second-stage crystallization kettle continues to crystallize and grow to the second prescribed grain size under the condition that the temperature of the lithium hexafluorophosphate mother liquor is controlled within a second prescribed temperature range, the lithium hexafluorophosphate mother liquor being delivered to the third-stage crystallization kettle through the second mother liquor delivery line; a part of the lithium hexafluorophosphate mother liquor delivered to the third-stage crystallization kettle growing to crystal particles having a third prescribed grain size under the condition that the temperature of the lithium hexafluorophosphate mother liquor is controlled within a third prescribed temperature range, and the crystal particles having a third prescribed grain size being delivered to a next process device through the first discharging line, while the other part grow to crystal particles having a grain size less than the third prescribed grain size, and the crystal particles having a grain size less than the third prescribed grain size are delivered to the fourth-stage crystallization kettle through the crystalline particle delivery line; and lithium hexafluorophosphate crystal particles delivered to the fourth-stage crystallization kettle growing to crystal particles having a fourth prescribed grain size under the condition that the temperature of the lithium hexafluorophosphate crystals is controlled within a fourth prescribed temperature range, and the crystal particles having a fourth prescribed grain size being delivered to a next process device through the second discharging line.

Preferably, the first prescribed temperature range is from -5°C to 0°C, and the first prescribed grain size is from 10 µm to 50 µm; the second prescribed temperature range is from -15°C to -10°C, and the second prescribed grain size is from 100 µm to 150 µm; the third prescribed temperature range is from -30°C to -25°C, and the third prescribed grain size is from 180 µm to 200 µm; and the fourth prescribed temperature range is from -32°C to -25°C, and the fourth prescribed grain size is from 180 µm to 200 µm.

The first-stage crystallization kettle, the second-stage crystallization kettle, the third-stage crystallization kettle, and at least one crystallization kettle of the fourth-stage crystallization kettles are provided with an agitator, and, preferably, a temperature drop rate that the temperature in the crystallization kettle at each of stages drops to the prescribed temperature range is controlled.

Additionally preferably, assuming that a mother liquor feeding amount of the lithium hexafluorophosphate mother liquor supplied from the lithium hexafluorophosphate mother liquor supply source to the first-stage crystallization kettle is Q1, a first discharging amount of the lithium hexafluorophosphate crystal particles delivered to the next process device through the first discharging line is Q2, and a second discharging amount of the lithium hexafluorophosphate crystal particles delivered to the next process device through the second discharging line is Q3, the mother liquor feeding amount Q1 is a sum of the first discharging amount Q2 and the second discharging amount, and the first discharging amount Q2 is twice the second discharging amount Q3.

Further preferably, the lithium hexafluorophosphate mother liquor supply line is provided with a flow meter and a regulating valve; the mother liquor heat exchange line is provided with an axial-flow pump; and according to the invention the first mother liquor delivery line, the second mother liquor delivery line, and the crystalline particle delivery line are provided with a regulating valve, respectively.

Preferably, the lithium hexafluorophosphate mother liquor supply line is connected to the mother liquor heat exchange line.

The present invention provides a crystallization method of lithium hexafluorophosphate, which is a crystallization method for crystallizing a mother liquor of the lithium hexafluorophosphate using the crystallization system of lithium hexafluorophosphate described above, comprising: a first-stage crystallization process carried out in the first-stage crystallization kettle, a second-stage crystallization process carried out in the second-stage crystallization kettle, a third-stage crystallization process carried out in the third-stage crystallization kettle, and a fourth-stage crystallization process carried out in the fourth-stage crystallization kettle, the crystallization processes from the first-stage crystallization process though the second-stage crystallization process to the third-stage crystallization process and the fourth-stage crystallization process being carried out continuously.

The crystallization system and crystallization method of lithium hexafluorophosphate according to the present disclosure may allow different crystallization stages to be carried out separately in different crystallization kettles and allow the crystallization kettles for carrying out different crystallization stages to be connected in series, such that continuous feeding and continuous discharging are realized in the course of crystallization, thereby fulfilling the purpose of further improving the production efficiency of lithium hexafluorophosphate.

### BRIEF DESCRIPTION OF THE DRAWINGS

FIG. 1 shows a schematic diagram of a crystallization system of lithium hexafluorophosphate according to the present disclosure.
FIG. 2 shows a process flowchart of a crystallization system of lithium hexafluorophosphate according to the present invention.
FIG. 3 shows a process flowchart of another example of a crystallization system of lithium hexafluorophosphate according to the present invention.

In the drawings, 10-crystallization system of lithium hexafluorophosphate; 11-first-stage crystallization kettle; 12-second-stage crystallization kettle; 13-third-stage crystallization kettle; 14-fourth-stage crystallization kettle; 20-lithium hexafluorophosphate mother liquor supply source; 30-next process device.

### DETAILED DESCRIPTION

The technical solutions of the present invention and effects thereof will be described in detail below with reference to specific embodiments. The following embodiments are used only for explaining the content of the present invention, but the invention is not just limited to the following embodiments or examples.

A crystallization system and crystallization method of lithium hexafluorophosphate are designed, on the basis of agitated crystallization, to carry out different crystallization stages separately in different crystallization kettles according to the crystallization characteristics of lithium hexafluorophosphate, and connect the crystallization kettles for carrying out different crystallization stages in series, such that continuous feeding and continuous discharging are realized in the course of crystallization, thereby fulfilling the purpose of further improving the production efficiency of lithium hexafluorophosphate.

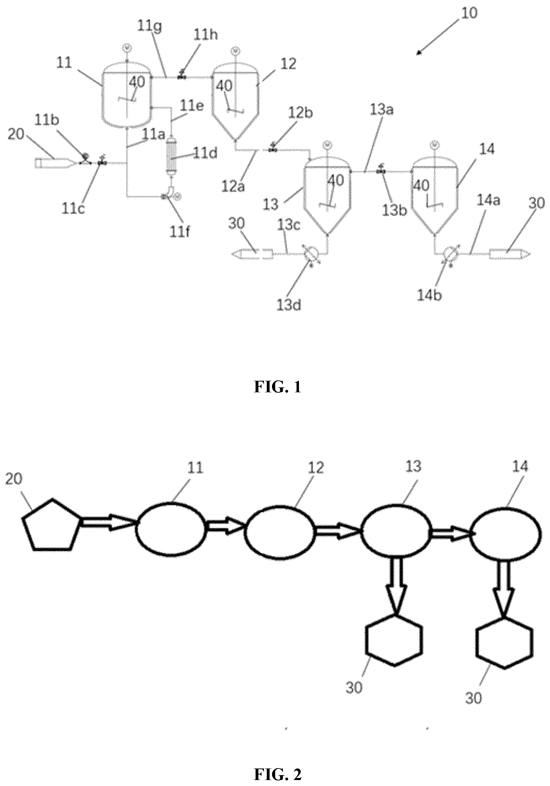

Specifically, a crystallization system 10 of lithium hexafluorophosphate provided in the present invention (as shown in FIG. 1) comprises a first-stage crystallization kettle 11, a second-stage crystallization kettle 12, a third-stage crystallization kettle 13, and a fourth-stage crystallization kettle 14.

The first-stage crystallization kettle 11 is connected to a lithium hexafluorophosphate mother liquor supply source 20 through a lithium hexafluorophosphate mother liquor supply line 11a, and a flow meter 11b and a regulating valve 11c are provided on the lithium hexafluorophosphate mother liquor supply line 11a.

Furthermore, the first-stage crystallization kettle 11 is further connected to the lithium hexafluorophosphate mother liquor supply source 20 through a mother liquor heat exchange line 11e connected with a mother liquor heat exchanger 11d, and the mother liquor heat exchange line 11e is provided with an axial-flow pump 11f. Concretely, one end of the mother liquor heat exchange line 11e is communicated with the first-stage crystallization kettle 11, and the other end of the mother liquor heat exchange line 11e is communicated with the lithium hexafluorophosphate mother liquor supply line 11a.

In addition, the first-stage crystallization kettle 11 is further connected to the second-stage crystallization kettle 12 through a first mother liquor delivery line 11g configured to deliver lithium hexafluorophosphate mother liquor having a first prescribed grain size, and the first mother liquor delivery line 11g is provided with a regulating valve 11h.

The second-stage crystallization kettle 12 is connected to the third-stage crystallization kettle 13 through a second mother liquor delivery line 12a configured to deliver lithium hexafluorophosphate mother liquor having a second prescribed grain size, and the second mother liquor delivery line 12a is provided with a regulating valve 12b.

The third-stage crystallization kettle 13 is connected to the fourth-stage crystallization kettle 14 through a crystalline particle delivery line 13a configured to deliver small crystalline particles in the third-stage crystallization kettle 13, and the crystalline particle delivery line 13a is provided with a regulating valve 13b. Besides, the third-stage crystallization kettle 13 is further connected to a next process device 30 through a first discharging line 13c, and the first discharging line 13c is provided with a metering pump 13d.

The fourth-stage crystallization kettle 14 is connected with a next process device 30 (such as a crystallization drying device) through a second discharging line 14a, and the second discharging line 14a is provided with a metering pump 14b.

In addition, an agitator 40 is provided in the first-stage crystallization kettle 11, the second-stage crystallization kettle 12, the third-stage crystallization kettle 13, and the fourth-stage crystallization kettle 14, respectively.

Hereinafter, the process flow of the crystallization system 10 of lithium hexafluorophosphate of the present invention is described with reference to FIG. 1 and FIG. 2.

As shown in FIG. 1 and FIG. 2, when the lithium hexafluorophosphate mother liquor supplied from the lithium hexafluorophosphate mother liquor supply source 20 to the first-stage crystallization kettle 11 crystallizes and grows to the first prescribed grain size (10 to 50 µm in this embodiment) under the condition that the temperature of the lithium hexafluorophosphate mother liquor is controlled within the first prescribed temperature range (-5°C to 0°C in this embodiment) by the mother liquor heat exchanger 11d, the lithium hexafluorophosphate mother liquor is delivered to the second-stage crystallization kettle 12 through the first mother liquor delivery line 11g. When the lithium hexafluorophosphate mother liquor delivered to the second-stage crystallization kettle 12 continues to crystallize and grows to the second prescribed grain size (100 to 150 µm in this embodiment) under the condition that the temperature of the lithium hexafluorophosphate mother liquor is controlled within the second prescribed temperature range (-15°C to -10°C in this embodiment), the lithium hexafluorophosphate mother liquor is delivered to the third-stage crystallization kettle 13 through the second mother liquor delivery line 12a. A part of the lithium hexafluorophosphate mother liquor delivered to the third-stage crystallization kettle 13 grows to crystal particles having the third prescribed grain size (180 to 200 µm in this embodiment) under the condition that the temperature of the lithium hexafluorophosphate mother liquor is controlled within the third prescribed temperature range (-30°C to -25°C in this embodiment), and the crystal particles having the third prescribed grain size are delivered to a next process device 30 through the first discharging line 13c, while the other part grows to crystal particles having a grain size less than the third prescribed grain size and the crystal particles having a grain size less than the third prescribed grain size are delivered to the fourth-stage crystallization kettle 14 through the crystalline particle delivery line 13a. The lithium hexafluorophosphate crystal particles delivered to the fourth-stage crystallization kettle 14 grows to crystal particles having the fourth prescribed grain size (180 to 200 µm in this embodiment) under the condition that the temperature of the lithium hexafluorophosphate crystal particles is controlled within the fourth prescribed temperature range (-32°C to -25°C in this embodiment), and the crystal particles having the fourth prescribed grain size are delivered to a next process device 30 through the second discharging line 14a.

Additionally, during the crystallization in the first-stage crystallization kettle 11, the temperature in the first-stage crystallization kettle 11 is controlled to slowly drop to the first prescribed temperature range (-5°C to 0°C in this embodiment). In this way, more uniform small crystals are easily precipitated in the first-stage crystallization kettle 11, and the amount of crystals precipitated is controllable without excessive small crystals. Moreover, the small crystals are dispersed by agitating with an agitator 40 to reduce the probability for the small crystals to encounter each other and lessen aggregation and settlement resulting from accumulation of small crystals, thereby ensuring that the small crystals supplied from the first-stage crystallization kettle 11 to the second-stage crystallization kettle 12 are uniform, which contributes to improvement of the crystallization efficiency and acquisition of uniform crystals. During the crystallization in the second-stage crystallization kettle 12, the temperature in the second-stage crystallization kettle 12 is controlled to rapidly drop to the second prescribed temperature range (-15°C to -10°C in this embodiment). In this way, the small crystals from the first-stage crystallization kettle 11 grow rapidly and uniformly in the second-stage crystallization kettle 12 along its surface. Moreover, the growing crystals are dispersed by agitating with the agitator 40 to reduce the probability for the grown crystals to encounter each other and lessen aggregation and settlement resulting from accumulation of crystals, thereby ensuring that the crystals supplied from the second-stage crystallization kettle 12 to the third-stage crystallization kettle 13 are uniform, which contributes to improvement of the crystallization efficiency and acquisition of uniform crystals.. In the third-stage crystallization kettle 13, grains having a large grain size are settled in the lower part, and grains having a small grain size stay in the middle part and upper part and will enter the fourth-stage crystallization kettle 14 through the line. The temperature in the fourth-stage crystallization kettle 14 may be set to be lower (about 2°C) than that in the third-stage crystallization kettle 13. In this way, a part of crystals will be further precipitated in the fourth-stage reaction kettle 14 and grow on the surfaces of the grains having a small grain size. Finally, the crystals in the third-stage crystallization kettle 13 and the fourth-stage crystallization kettle 14 are precipitated together with homogeneous grain sizes.

In addition, assuming that a mother liquor feeding amount of the lithium hexafluorophosphate mother liquor supplied from the lithium hexafluorophosphate mother liquor supply source to the first-stage crystallization kettle is Q1, a first discharging amount of the lithium hexafluorophosphate crystal particles delivered to the next process device through the first discharging line is Q2, and a second discharging amount of the lithium hexafluorophosphate crystal particles delivered to the next process device through the second discharging line is Q3, the mother liquor feeding amount Q1 is a sum of the first discharging amount Q2 and the second discharging amount, and the first discharging amount Q2 is twice the second discharging amount Q3.

The crystallization method of lithium hexafluorophosphate provided in the present invention, which is a crystallization method for crystallizing a mother liquor of the lithium hexafluorophosphate using the crystallization system 10 of lithium hexafluorophosphate described above, comprises: a first-stage crystallization process carried out in the first-stage crystallization kettle 11, a second-stage crystallization process carried out in the second-stage crystallization kettle 12, a third-stage crystallization process carried out in the third-stage crystallization kettle 13, and a fourth-stage crystallization process carried out in the fourth-stage crystallization kettle 14, the crystallization processes from the first-stage crystallization process though the second-stage crystallization process to the third-stage crystallization process and the fourth-stage crystallization process being carried out continuously.

The crystallization system and crystallization method of lithium hexafluorophosphate according to the present disclosure may allow different crystallization stages to be carried out separately in different crystallization kettles and allow the crystallization kettles for carrying out different crystallization stages to be connected in series, such that continuous feeding and continuous discharging are realized in the course of crystallization, thereby fulfilling the purpose of further improving the production efficiency of lithium hexafluorophosphate. Meanwhile, the crystallization in the crystallization kettles at all stages are precisely controlled to reduce aggregation and settlement during the crystallization, so as to ensure that crystals in the crystallization kettles at all stages are uniform, thereby improving the crystallization efficiency and obtaining uniform crystals.

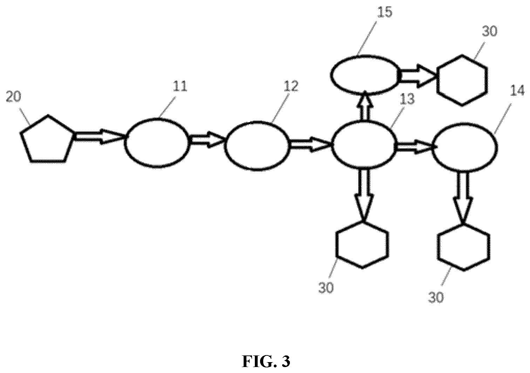

As other embodiments of the present invention, the structure and process flow as shown in FIG. 3 may be used, for example. In FIG. 3, arrows indicate the flow directions of materials (mother liquors or crystalline particles). This embodiment differs from the above embodiments in that another fourth-stage crystallization kettle 15 is further provided in addition to the fourth-stage crystallization kettle 14. That is, in this case, a part of the lithium hexafluorophosphate mother liquor delivered to the third-stage crystallization kettle 13 grows to crystal particles having the third prescribed grain size (180 to 200 µm in this embodiment) under the condition that the temperature of the lithium hexafluorophosphate mother liquor is controlled within the third prescribed temperature range (-30°C to -25°C in this embodiment), and the crystal particles having the third prescribed grain size are delivered to a next process device 30 through the first discharging line 13c, while the other part grows to crystal particles having a grain size less than the third prescribed grain size, and the crystal particles having a grain size less than the third prescribed grain size are further delivered to the fourth-stage crystallization kettle 15 through another crystalline particle delivery line (not shown) in addition to being delivered to the fourth-stage crystallization kettle 14 through the crystalline particle delivery line 13a. Besides, three or more fourth-stage crystallization kettles may alternatively be provided.

Further, it is to be noted that each of the specific technical features described in the above specific embodiments may be combined in any suitable manner if without contradiction.

## Claims

1. A crystallization method of lithium hexafluorophosphate, which is a crystallization method for crystallizing a mother liquor of the lithium hexafluorophosphate using a crystallization system of lithium hexafluorophosphate, the crystallization system of lithium hexafluorophosphate comprising a first-stage crystallization kettle, a second-stage crystallization kettle, a third-stage crystallization kettle, and one or more fourth-stage crystallization kettles, and further comprising a lithium hexafluorophosphate mother liquor supply source;
the first-stage crystallization kettle, which is connected to the lithium hexafluorophosphate mother liquor supply source through a lithium hexafluorophosphate mother liquor supply line; further connected to the lithium hexafluorophosphate mother liquor supply source through a mother liquor heat exchange line connected with a mother liquor heat exchanger; and further connected to the second-stage crystallization kettle through a first mother liquor delivery line configured to deliver lithium hexafluorophosphate mother liquor having a first prescribed grain size,
the second-stage crystallization kettle, which is connected to the third-stage crystallization kettle through a second mother liquor delivery line configured to deliver lithium hexafluorophosphate mother liquor having a second prescribed grain size,
the third-stage crystallization kettle, which is connected to the fourth-stage crystallization kettle through a crystalline particle delivery line configured to deliver small crystalline particles in the third-stage crystallization kettle; and further connected to a next process device through a first discharging line;
the fourth-stage crystallization kettle, which is connected to a next process device through a second discharging line;
when the lithium hexafluorophosphate mother liquor supplied from the lithium hexafluorophosphate mother liquor supply source to the first-stage crystallization kettle crystallizes and grows to the first prescribed grain size by use of the mother liquor heat exchanger, which is capable to control the temperature of the lithium hexafluorophosphate mother liquor within a first prescribed temperature range, the lithium hexafluorophosphate mother liquor is configured of being delivered to the second-stage crystallization kettle through the first mother liquor delivery line;
when the lithium hexafluorophosphate mother liquor delivered to the second-stage crystallization kettle continues to crystallize and grow to the second prescribed grain size under the condition that the temperature of the lithium hexafluorophosphate mother liquor is controlled within a second prescribed temperature range, the lithium hexafluorophosphate mother liquor being delivered to the third-stage crystallization kettle through the second mother liquor delivery line;
a part of the lithium hexafluorophosphate mother liquor is capable of being delivered to the third-stage crystallization kettle growing to crystal particles having a third prescribed grain size under the condition that the temperature of the lithium hexafluorophosphate mother liquor is controlled within a third prescribed temperature range, and the crystal particles having a third prescribed grain size being delivered to a next process device through the first discharging line, while the other part grows to crystal particles having a grain size less than the third prescribed grain size, and the crystal particles having a grain size less than the third prescribed grain size are delivered to the fourth-stage crystallization kettle through the crystalline particle delivery line; and
the lithium hexafluorophosphate crystal particles delivered to the fourth-stage crystallization kettle grow to crystal particles having a fourth prescribed grain size under the condition that the temperature of the lithium hexafluorophosphate crystal particles is controlled within a fourth prescribed temperature range, and the crystal particles having a fourth prescribed grain size being delivered to a next process device through the second discharging line, wherein
an agitator is provided in the first-stage crystallization kettle, the second-stage crystallization kettle, the third-stage crystallization kettle, and the fourth-stage crystallization kettle, respectively, and adjacent crystallization kettles are directly connected via respective delivery lines each comprising a regulating valve;
wherein the agitator is configured to prevent accumulation of crystals, and ensure that the crystals supplied from the first-stage crystallization kettle to the second-stage crystallization kettle and from the second-stage crystallization kettle to the third-stage crystallization kettle are uniform,
wherein the agitator is further configured to prevent accumulation of crystals, so that in the third-stage crystallization kettle, grains having a large grain size are settled in the lower part, and grains having a small grain size stay in the middle part and upper part and are capable of entering the fourth-stage crystallization kettle through the crystalline particle delivery line, the method comprising: a first-stage crystallization process carried out in the first-stage crystallization kettle, a second-stage crystallization process carried out in the second-stage crystallization kettle, a third-stage crystallization process carried out in the third-stage crystallization kettle, and a fourth-stage crystallization process carried out in the fourth-stage crystallization kettle, the crystallization processes from the first-stage crystallization process through the second-stage crystallization process to the third-stage crystallization process and the fourth-stage crystallization process being carried out continuously.

2. The method according to claim 1, wherein the system is capable of controlling a temperature drop rate that the temperature in the crystallization kettle at each of stages drops to the prescribed temperature.

3. The method according to claim 1, wherein the lithium hexafluorophosphate mother liquor supply line is provided with a flow meter and a regulating valve; the mother liquor heat exchange line is provided with a axial-flow pump.

4. The method according to claim 3, wherein the lithium hexafluorophosphate mother liquor supply line is connected to the mother liquor heat exchange line.

## Patentansprüche

1. Kristallisierungsverfahren von Lithiumhexafluorphosphat, welches ein Kristallisierungsverfahren für ein Kristallisieren einer Mutterlauge des Lithiumhexafluorphosphats unter Verwendung eines Kristallisierungssystems von Lithiumhexafluorphosphat ist, wobei das Kristallisierungssystem des Lithiumhexafluorphosphats einen Erststufenkristallisierungskessel, einen Zweitstufenkristallisierungskessel, einen Drittstufenkristallisierungskessel und einen oder mehrere Viertstufenkristallisierungskessel aufweist und weiter eine Lithiumhexafluorphosphat-Mutterlaugenversorgungsquelle aufweist;
der Erststufenkristallisierungskessel, welcher durch eine Lithiumhexafluorphosphat-Mutterlaugenversorgungsleitung mit der Lithiumhexafluorphosphat-Mutterlaugenversorgungsquelle verbunden ist, ist weiter durch eine Mutterlaugenwärmetauschleitung, die mit einem Mutterlaugenwärmetauscher verbunden ist, mit der Lithiumhexafluorphosphat-Mutterlaugenversorgungsquelle verbunden, und ist weiter durch eine erste Mutterlaugenzuführungsleitung, die eingerichtet ist, die Lithiumhexafluorphosphat-Mutterlauge zu liefern, die eine erste vorbestimmte Korngröße aufweist, mit dem Zweitstufenkristallisierungskessel verbunden,
der Zweitstufenkristallisierungskessel, welcher durch eine zweite Mutterlaugenzuführungsleitung, die eingerichtet ist, die Lithiumhexafluorphosphat-Mutterlauge zu liefern, die eine zweite vorbestimmte Korngröße aufweist, ist mit dem Drittstufenkristallisierungskessel verbunden,
der Drittstufenkristallisierungskessel, welcher durch eine Kristallteilchenzuführungsleitung, die eingerichtet ist, kleine Kristallteilchen in den Drittstufenkristallisierungskessel zu liefern, ist mit dem Viertstufenkristallisierungskessel verbunden, und ist weiter durch eine erste Entleerungsleitung mit einer nächsten Prozessvorrichtung verbunden;
der Viertstufenkristallisierungskessel, welcher durch eine zweite Entleerungsleitung mit einer nächsten Prozessvorrichtung verbunden ist;
wenn die Lithiumhexafluorphosphat-Mutterlauge, die von der Lithiumhexafluorphosphat-Mutterlaugenversorgungsquelle an den Erststufenkristallisierungskessel bereitgestellt wird, durch eine Verwendung des Mutterlaugenwärmetauschers, welcher geeignet ist, die Temperatur der Lithiumhexafluorphosphat-Mutterlauge innerhalb eines ersten vorbestimmten Temperaturbereichs zu regeln, kristallisiert und zu der ersten vorbestimmten Korngröße wächst, wird die Lithiumhexafluorphosphat-Mutterlauge konfiguriert, durch die erste Mutterlaugenzuführungsleitung an den Zweitstufenkristallisierungskessel geliefert zu werden;
wenn die Lithiumhexafluorphosphat-Mutterlauge, die an den Zweitstufenkristallisierungskessel geliefert wird, unter der Bedingung, dass die Temperatur der Lithiumhexafluorphosphat-Mutterlauge innerhalb eines zweiten vorbestimmten Temperaturbereichs geregelt wird, fortfährt zu kristallisieren und zu der zweiten vorbestimmten Korngröße zu wachsen, wird die Lithiumhexafluorphosphat-Mutterlauge durch die zweite Mutterlaugenzuführungsleitung an den Drittstufenkristallisierungskessel geliefert;
ein Teil der Lithiumhexafluorphosphat-Mutterlauge ist geeignet, an den Drittstufenkristallisierungskessel geliefert zu werden, der sie unter der Bedingung, dass die Temperatur der Lithiumhexafluorphosphat-Mutterlauge innerhalb eines dritten vorbestimmten Temperaturbereichs geregelt wird, zu Kristallteilchen wachsen lässt, die eine dritte vorbestimmte Korngröße aufweisen, und die Kristallteilchen, die eine dritte vorbestimmte Korngröße aufweisen, werden durch die erste Entleerungsleitung zu einer nächsten Prozessvorrichtung geliefert, während der andere Teil zu Kristallteilchen wächst, die eine Korngröße kleiner als die dritte vorbestimmte Korngröße aufweisen, und die Kristallteilchen, die eine Korngröße kleiner als die dritte vorbestimmte Korngröße aufweisen, werden durch die Kristallteilchenzuführungsleitung an den Viertstufenkristallisierungskessel geliefert; und
die Lithiumhexafluorphosphat-Kristallteilchen, die an den Viertstufenkristallisierungskessel geliefert werden, wachsen unter der Bedingung, dass die Temperatur der Lithiumhexafluorphosphat-Kristallteilchen innerhalb eines vierten vorbestimmten Temperaturbereichs geregelt wird, zu Kristallteilchen, die eine vierte vorbestimmte Korngröße aufweisen, und die Kristallteilchen, die eine vierte vorbestimmte Korngröße aufweisen, werden durch die zweite Entleerungsleitung zu einer nächsten Prozessvorrichtung geliefert, wobei
ein Mischer jeweils in dem Erststufenkristallisierungskessel, dem Zweitstufenkristallisierungskessel, dem Drittstufenkristallisierungskessel und dem Viertstufenkristallisierungskessel vorgesehen ist, und benachbarte Kristallisierungskessel direkt über jeweilige Zuführungsleitungen verbunden sind, die jeweils ein Regulierungsventil aufweisen;
wobei der Mischer eingerichtet ist, eine Akkumulation von Kristallen zu verhindern und sicherzustellen, dass die Kristalle, die von dem Erststufenkristallisierungskessel zu dem Zweitstufenkristallisierungskessel und von dem Zweitstufenkristallisierungskessel zu dem Drittstufenkristallisierungskessel bereitgestellt werden, gleichförmig sind,
wobei der Mischer weiter eingerichtet ist, eine Akkumulation von Kristallen zu verhindern, sodass in dem Drittstufenkristallisierungskessel Körner, die eine große Korngröße aufweisen, in dem unteren Teil abgesetzt werden, und Körner, die eine kleine Korngröße aufweisen, in dem mittleren Teil und dem oberen Teil verbleiben und geeignet sind, durch die Kristallteilchenzuführungsleitung in den Viertstufenkristallisierungskessel einzutreten, wobei das Verfahren umfasst: einen Erststufenkristallisierungsprozess, der in dem Erststufenkristallisierungskessel ausgeführt wird, einen Zweitstufenkristallisierungsprozess, der in dem Zweitstufenkristallisierungskessel ausgeführt wird, einen Drittstufenkristallisierungsprozess, der in dem Drittstufenkristallisierungskessel ausgeführt wird und einen Viertstufenkristallisierungsprozess, der in dem Viertstufenkristallisierungskessel ausgeführt wird, wobei die Kristallisierungsprozesse von dem Erststufenkristallisierungsprozess über den Zweitstufenkristallisierungsprozess zu dem Drittstufenkristallisierungsprozess und dem Viertstufenkristallisierungsprozess kontinuierlich ausgeführt werden.

2. Verfahren gemäß Anspruch 1, wobei das System geeignet ist, eine Temperaturabnahmerate so zu steuern, dass die Temperatur in dem Kristallisierungskessel an jeder der Stufen auf die vorbestimmte Temperatur abnimmt.

3. Verfahren gemäß Anspruch 1, wobei die Lithiumhexafluorphosphat-Mutterlaugenversorgungsleitung mit einem Flussmeter und einem Regulierungsventil versehen ist; wobei die Mutterlaugenwärmetauschleitung mit einer Axialflusspumpe versehen ist.

4. Verfahren gemäß Anspruch 3, wobei die Lithiumhexafluorphosphat-Mutterlaugenversorgungsleitung mit der Mutterlaugenwärmetauschleitung verbunden ist.

## Revendications

1. Procédé de cristallisation de l'hexafluorophosphate de lithium, qui est un procédé de cristallisation permettant de cristalliser une liqueur mère de l'hexafluorophosphate de lithium en utilisant un système de cristallisation d'hexafluorophosphate de lithium, le système de cristallisation d'hexafluorophosphate de lithium comprenant une cuve de cristallisation de premier étage, une cuve de cristallisation de deuxième étage, une cuve de cristallisation de troisième étage et une ou plusieurs cuves de cristallisation de quatrième étage, et comprenant en outre une source d'alimentation en liqueur mère d'hexafluorophosphate de lithium ;
la cuve de cristallisation de premier étage, qui est raccordée à la source d'alimentation en liqueur mère d'hexafluorophosphate de lithium par l'intermédiaire d'une conduite d'alimentation en liqueur mère d'hexafluorophosphate de lithium ; qui en outre raccordée à la source d'alimentation en liqueur mère d'hexafluorophosphate de lithium par l'intermédiaire d'une conduite d'échange thermique de liqueur mère raccordée à un échangeur thermique de liqueur mère ; et qui est en outre raccordée à la cuve de cristallisation de deuxième étage par l'intermédiaire d'une première conduite d'acheminement de liqueur mère configurée pour acheminer la liqueur mère d'hexafluorophosphate de lithium ayant une première granulométrie prescrite,
la cuve de cristallisation de deuxième étage, qui est raccordée à la cuve de cristallisation de troisième étage par l'intermédiaire d'une deuxième conduite d'acheminement de liqueur mère configurée pour acheminer la liqueur mère d'hexafluorophosphate de lithium ayant une deuxième granulométrie prescrite,
la cuve de cristallisation de troisième étage, qui est raccordée à la cuve de cristallisation de quatrième étage par l'intermédiaire d'une conduite d'acheminement de particules cristallines configurée pour acheminer de petites particules cristallines dans la cuve de cristallisation de troisième étage ; et qui est en outre raccordée à un dispositif de traitement ultérieur par l'intermédiaire d'une première conduite de décharge ;
la cuve de cristallisation de quatrième étage, qui est raccordée à un dispositif de traitement ultérieur par l'intermédiaire d'une deuxième conduite de décharge ;
lorsque la liqueur mère d'hexafluorophosphate de lithium fournie de la source d'alimentation en liqueur mère d'hexafluorophosphate de lithium à la cuve de cristallisation de premier étage cristallise et croît jusqu'à la première granulométrie prescrite par utilisation de l'échangeur thermique de liqueur mère, qui est capable de régler la température de la liqueur mère d'hexafluorophosphate de lithium dans une première plage de température prescrite, la liqueur mère d'hexafluorophosphate de lithium est configurée pour être acheminée vers la cuve de cristallisation de deuxième étage par l'intermédiaire de la première conduite d'acheminement de liqueur mère ;
lorsque la liqueur mère d'hexafluorophosphate de lithium acheminée à la cuve de cristallisation de deuxième étage continue à cristalliser et à croître jusqu'à la deuxième granulométrie prescrite, à condition que la température de la liqueur mère d'hexafluorophosphate de lithium soit réglée dans une deuxième plage de température prescrite, la liqueur mère d'hexafluorophosphate de lithium étant acheminée vers la cuve de cristallisation de troisième étage par l'intermédiaire de la deuxième conduite d'acheminement de liqueur mère ;
une partie de la liqueur mère d'hexafluorophosphate de lithium peut être acheminée à la cuve de cristallisation de troisième étage permettant la croissance en particules cristallines ayant une troisième granulométrie prescrite, à condition que la température de la liqueur mère d'hexafluorophosphate de lithium soit réglée dans une troisième plage de température prescrite, et les particules cristallines ayant une troisième granulométrie prescrite étant acheminées au dispositif de traitement ultérieur par l'intermédiaire de la première conduite de décharge, tandis que l'autre partie croît en particules cristallines ayant une granulométrie inférieure à la troisième granulométrie prescrite, et les particules cristallines ayant une granulométrie inférieure à la troisième granulométrie prescrite sont acheminées à la cuve de cristallisation de quatrième étage par l'intermédiaire de la conduite d'acheminement de particules cristallines ; et
les particules cristallines d'hexafluorophosphate de lithium acheminées vers la cuve de cristallisation de quatrième étage croissent en particules cristallines ayant une quatrième granulométrie prescrite, à condition que la température des particules cristallines d'hexafluorophosphate de lithium soit réglée dans une quatrième plage de température prescrite, et les particules cristallines ayant une quatrième granulométrie prescrite étant acheminées au dispositif de traitement ultérieur par l'intermédiaire de la deuxième conduite de décharge, dans lequel
un agitateur est prévu respectivement dans la cuve de cristallisation de premier étage, la cuve de cristallisation de deuxième étage, la cuve de cristallisation de troisième étage et la cuve de cristallisation de quatrième étage, et les cuves de cristallisation adjacentes sont directement raccordées par l'intermédiaire de conduites d'acheminement respectives comprenant chacune une vanne de régulation ;
dans lequel l'agitateur est configuré pour empêcher l'accumulation de cristaux et garantir que les cristaux fournis de la cuve de cristallisation de premier étage à la cuve de cristallisation de deuxième étage et de la cuve de cristallisation de deuxième étage à la cuve de cristallisation de troisième étage sont uniformes,
dans lequel l'agitateur est en outre configuré pour empêcher l'accumulation de cristaux, de sorte que dans la cuve de cristallisation de troisième étage, les grains présentant une grande granulométrie se déposent dans la partie inférieure, et les grains présentant une petite granulométrie restent dans la partie médiane et la partie supérieure et peuvent entrer dans la cuve de cristallisation de quatrième étage par l'intermédiaire de la conduite d'acheminement de particules cristallines, le procédé comprenant : un procédé de cristallisation de premier étage réalisé dans la cuve de cristallisation de premier étage, un procédé de cristallisation de deuxième étage réalisé dans la cuve de cristallisation de deuxième étage, un procédé de cristallisation de troisième étage réalisé dans la cuve de cristallisation de troisième étage, et un procédé de cristallisation de quatrième étage réalisé dans la cuve de cristallisation de quatrième étage, les procédés de cristallisation depuis le procédé de cristallisation de premier étage, en passant par le procédé de cristallisation de deuxième étage et le procédé de cristallisation de troisième étage, jusqu'au procédé de cristallisation de quatrième étage étant réalisés en continu.

2. Procédé selon la revendication 1, dans lequel le système est capable de régler un taux de baisse de température auquel la température dans la cuve de cristallisation au niveau de chacun des étages descend jusqu'à la température prescrite.

3. Procédé selon la revendication 1, dans lequel la conduite d'alimentation en liqueur mère d'hexafluorophosphate de lithium est munie d'un débitmètre et d'une vanne de régulation ; la conduite d'échange thermique de liqueur mère est munie d'une pompe axiale.

4. Procédé selon la revendication 3, dans lequel la conduite d'alimentation en liqueur mère d'hexafluorophosphate de lithium est raccordée à la conduite d'échange thermique de liqueur mère.
